**Europäisches Patentamt**

**European Patent Office**

**Office européen des brevets**

(19)

(11) Numéro de publication : **0 351 339 B1**

# (12) FASCICULE DE BREVET EUROPEEN

(45) Date de publication du fascicule du brevet :
**04.01.95 Bulletin 95/01**

(51) Int. Cl.$^6$ : **G05D 16/06, B63C 11/52**

(21) Numéro de dépôt : **89430018.5**

(22) Date de dépôt : **07.07.89**

(54) **Procédé et dispositifs pour maintenir le gaz contenu dans une enceinte immergée en équilibre de pression avec l'extérieur.**

(30) Priorité : **15.07.88 FR 8809775**

(43) Date de publication de la demande :
**17.01.90 Bulletin 90/03**

(45) Mention de la délivrance du brevet :
**04.01.95 Bulletin 95/01**

(84) Etats contractants désignés :
**DE ES GB IT**

(56) Documents cités :
**WO-A-79/01136**
**FR-A- 2 089 007**
**FR-A- 2 525 516**
**FR-A- 2 612 876**

(73) Titulaire : **Grosso, Gilles A .**
**58 Boucle de la Malogineste**
**F-83140 Six Fours les Plages (FR)**

(72) Inventeur : **Grosso, Gilles A .**
**58 Boucle de la Malogineste**
**F-83140 Six Fours les Plages (FR)**

(74) Mandataire : **Moretti, René**
**c/o Cabinet BEAU DE LOMENIE**
**"Prado-Mermoz"**
**232, Avenue du Prado**
**F-13008 Marseille (FR)**

EP 0 351 339 B1

## Description

La présente invention a pour objet un procédé et des dispositifs pour maintenir l'intérieur d'une enceinte immergée remplie de gaz en équilibre de pression avec l'extérieur.

Le secteur technique de l'invention est celui de la construction des appareils immergés, notamment des transducteurs électro-acoustiques.

Les enceintes immergées à grande profondeur doivent résister à des pressions hydrostatiques importantes ce qui entraîne des contraintes de construction mécanique de ces enceintes.

Dans certains cas, l'intérieur de l'enceinte peut être en communication avec l'extérieur, de sorte qu'il y a toujours un équilibre de pression et que les parois de l'enceinte n'ont à résister à aucune pression. Toutefois, dans de nombreux cas, il n'est pas possible de laisser l'eau pénétrer dans l'enceinte immergée, à l'intérieur de laquelle se trouvent des appareils ou circuits électriques ou électroniques qui ne peuvent supporter d'être mis en contact avec l'eau ou avec un liquide intermédiaire.

Dans ces cas là, on met en communication l'intérieur de l'enceinte avec une poche déformable qui est remplie de gaz et qui est immergée en même temps que l'enceinte, de telle sorte que le gaz qui se trouve dans l'enceinte est maintenu constamment à la pression hydrostatique.

Dans la demande internationale WO-A-79-01-136 (ANDREW MASTER HONES Limited), est décrit une source d'énergie immergeable comportant un moteur contenu dans une enceinte qui communique avec plusieurs poches déformables d'accumulateurs hydrauliques qui sont soumises à la pression hydrostatique d'immersion.

Dans la suite de l'exposé on se référera à des exemples concernant des transducteurs piézoélectriques qui composent par exemple une antenne de sonar qui doit être immergée à de très grandes profondeurs de l'ordre de plusieurs centaines ou milliers de mètres. Il est précisé que ce choix n'est pas limitatif et que la présente invention peut s'appliquer à d'autres enceintes immergées.

A ce jour, les transducteurs immergés comportent un empilement d'éléments piézo-électrique placé à l'intérieur d'un boîtier étanche, qui est relié par une canalisation à une poche ou vessie en élastomère déformable qui est placée dans une enceinte de protection mécanique qui communique avec le milieu ambiant. Si la vessie est remplie d'air à la pression atmosphérique et si le volume du boîtier du transducteur est relativement important un tel système ne peut compenser la pression hydrostatique que pour une profondeur d'immersion limitée. En effet, soit Vo le volume initial de la vessie, Vl le volume d'air dans le boîtier, Po la pression initiale et P la pression hydrostatique lorsque tout l'air contenu dans la vessie est passé dans le boîtier on peut écrire :

$$Po\,(Vo\ +\ V_l)\ =\ P_l\,V_l \quad \text{d'où} \quad \frac{P_1}{Po}\ =\ 1\ +\ \frac{V_o}{V_1}$$

Pour atteindre une profondeur d'immersion de 500 m qui correspond à une pression hydrostatique de 50 bars il faut donc utiliser une vessie dont le volume est égal à 49 fois celui de l'ensemble des boîtiers de transducteurs si la pression initiale Po = 1 bar. Un tel volume de vessie n'est généralement pas compatible avec les contraintes d'encombrement.

Pour réduire le volume d'air on a utilisé des systèmes de compensation composés de vessies ou de poches déformables qui sont prégonflées sous une pression Po égale à plusieurs fois la pression atmosphérique.

Si par exemple Po = 5 bars et si

$$\frac{V_o}{V_1}\ =\ 19$$

la pression hydrostatique limite $P_l$ = Po x 20 soit $P_l$ = 100 bars c'est-à-dire que l'on peut atteindre une profondeur d'immersion maxima de 1 000 mètres.

Cette solution entraîne que dès le début de l'immersion le boîtier du transducteur est soumis à une pression interne et doit pouvoir supporter celle-ci.

Les boîtiers ayant un volume important ne peuvent pas supporter une pression interne élevée ce qui limite les profondeurs d'immersion que l'on peut atteindre par un système de compensation de pression comportant des vessies prégonflées.

Une autre solution consiste à relier le boîtier du transducteur à une bouteille d'air comprimé munie d'un détendeur comme celles qui sont utilisées pour la plongée.

Dans ce cas, pendant la descente du transducteur et de la bouteille, le détendeur délivre de l'air a une pression qui correspond sensiblement à la pression hydrostatique. Même si le volume de la bouteille est petit par rapport au volume du boîtier, on peut atteindre une grande profondeur d'immersion si la bouteille contient du gaz fortement comprimé. Par exemple, si la pression initiale dans la bouteille est de 50 bars et si le rapport

$$\frac{V_o}{V_1}\ =\ \frac{1}{10}$$

on pourra atteindre une pression hydrostatique de 55 bars soit une profondeur de 550 mètres. A la remontée vers la surface une surpression se crée à l'intérieur du boîtier et un clapet ou le détendeur laisse s'échapper l'air en excès.

Cette solution entraine donc la formation de bulles d'air à la remontée ce qui est contre indiqué dans le cas d'antennes de sonar immergées dans des buts militaires.

De plus, en cas de mauvais fonctionnement du détendeur on risque de créer dans le boîtier une surpression qu'il ne peut supporter d'où un risque de destruction du boîtier et des équipements qu'il contient.

De plus, dans le cas où les transducteurs font partie d'un engin immergé qui est remorqué par un navire, la profondeur d'immersion varie continuellement ce qui entraine un échappement de bulles d'air chaque fois que le transducteur remonte, ce qui entraine une consommation d'air plus rapide que la consommation prévue et peut entraîner une différence de pression entre l'extérieur et l'intérieur du boîtier supérieure à la résistance mécanique de celui-ci.

L'objectif de la présente invention est de procurer des moyens qui permettent d'équilibrer la pression de gaz à l'intérieur d'une enceinte immergée avec la pression hydrostatique au moyen de vessies ou de poches déformables remplies de gaz qui sont immergées en même temps que l'enceinte et qui permettent d'atteindre de grandes profondeurs d'immersion sans avoir à utiliser des poches de grand volume ni à prégonfler les enceintes en surface.

Un procédé selon l'invention est du type dans lequel on immerge simultanément une enceinte et une poche déformable remplie de gaz qui communique avec ladite enceinte.

L'objectif de l'invention est atteint au moyen d'un procédé pour maintenir le gaz contenu dans une enceinte immergée en équilibre de pression avec l'extérieur, dans lequel on immerge simultanément ladite enceinte et plusieurs bouteilles contenant chacune une poche déformable remplie de gaz qui communique avec ladite enceinte, et dans lequel lesdites poches déformables sont remplies de gaz comprimé à des pressions différentes d'une poche à l'autre, et pendant l'immersion on établit automatiquement la communication entre ladite enceinte et chacune des dites poches déformables lorsque la pression hydrostatique atteint sensiblement la pression du gaz contenu dans ladite poche et pendant la remontée en surface on isole automatiquement chacune des poches lorsque la pression dans celle-ci atteint à nouveau la pression initiale.

Les dispositifs selon l'invention sont du type connu comportant une enceinte qui est immergée simultanément avec une poche déformable remplie de gaz, qui communique avec ladite enceinte.

Un dispositif selon l'invention pour maintenir le gaz contenu dans une enceinte immergée en équilibre de pression avec l'extérieur, comporte plusieurs bouteilles contenant chacune une poche déformable remplie de gaz qui communique avec l'intérieur de ladite enceinte et qui est immergée en même temps que celle-ci, dans lequel lesdites poches déformables desdites bouteilles sont remplies de gaz comprimé à des pressions différentes, lesquelles poches sont connectées en parallèle sur un collecteur qui est branché à ladite enceinte et chacune des poches desdites bouteilles autres que la poche de ladite bouteille qui contient le gaz le moins comprimé, est branchée au dit collecteur par une vanne à trois voies qui est commandée automatiquement par des moyens qui ouvrent la communication entre ladite poche et ledit collecteur lorsque la pression hydrostatique est sensiblement égale à la pression dans ladite poche et qui ferment automatiquement ladite communication lorsque la pression hydrostatique est légèrement inférieure à la pression dans ladite poche.

Selon un mode de réalisation préférentiel chaque poche déformable est placée à l'intérieur d'une enceinte métallique, en forme de bouteille, qui comporte une première virole cylindrique fermée par un couvercle et une deuxième virole cylindrique fermée par un fond bombé lesquelles viroles sont assemblées entre elles par deux brides entre lesquelles l'ouverture de ladite poche est serrée de façon étanche et ledit fond bombé comporte des ouvertures qui communiquent la pression hydrostatique a l'extérieur de la dite poche tandis que ledit couvercle comporte des ouvertures qui mettent l'intérieur de ladite poche en communication avec ledit collecteur ou avec une des dites vannes a trois voies.

L'invention a pour résultat la possibilité d'immerger des enceintes a grande profondeur en maintenant celles-ci remplies d'un gaz en équipression avec la pression hydrostatique sans avoir a utiliser de poches déformables encombrantes.

Les dispositifs selon l'invention utilisent des poches prégonflées en surface qui permettent d'atteindre de grandes profondeurs d'immersion sans jamais exercer de surpression à l'intérieur des enceintes qui très souvent ne sont pas construites pour supporter une surpression, notamment dans le cas de transducteurs électro-acoustiques.

L'encombrement total d'un dispositif selon l'invention est plus réduit que celui des dispositifs connus permettant d'atteindre la même profondeur d'immersion.

Les dispositifs selon l'invention s'adaptent facilement aux variations de la profondeur d'immersion, par exemple dans le cas d'une antenne sonar qui est remorquée et dont la profondeur d'immersion varie pendant le remorquage.

Les dispositifs selon l'invention permettent de multiplier le nombre d'étages, c'est-a-dire le nombre de poches gonflées à des pressions initiales différentes afin d'accéder à des immersions importantes.

Examinons le cas, par exemple, d'un transducteur électroacoustique ne pouvant supporter aucune surpression interne, ayant un volume résiduel minimum de 4 litres qui doit supporter une immersion prolongée à une profondeur de 250 m, laquelle peut varier.

Il n'est pas possible d'utiliser des vessies déformables prégonflées puisque le transducteur ne peut supporter aucune surpression. Il n'est pas possible d'utiliser des bouteilles munies d'un détendeur qui ont une autonomie limitée et qui ne permettent pas de savoir à quel moment la réserve d'air est devenue insuffisante.

On peut utiliser des poches remplies d'air à la pression atmosphérique mais dans ce cas il faut disposer d'un volume d'air initial de 400 litres pour pouvoir atteindre une immersion de 250 m.

Si l'on utilise un dispositif selon l'invention comportant deux étages de 72 litres chacun gonflés à des pressions respectives de 1 bar et 3 bars, il suffit d'un volume initial de 144 litres.

Si l'on utilise un dispositif selon l'invention comportant trois étages de 37 litres chacun gonflés respectivement à 1 bar, 2,3 bars et 7,6 bars, il suffit d'un volume initial de 111 litres.

Avec 4 étages de 25 litres chacun on arrive à un volume initial de 100 litres. On voit donc qu'un dispositif selon l'invention permet de réduire sensiblement le volume initial de gaz nécessaire pour maintenir une enceinte en équipression sans jamais ne mettre l'intérieur de celle-ci en surpression.

La description suivante se réfère aux dessins annexés qui représentent, sans aucun caractère limitatif un exemple de réalisations d'un dispositif selon l'invention.

La figure 1 est une vue d'ensemble d'un dispositif selon l'invention.

La figure 2 est une coupe axiale d'une enceinte métallique contenant une poche déformable.

Les figures 3 et 4 sont des coupes axiales d'une vanne automatique équipant des enceintes selon la figure 2.

La figure 5 est une coupe axiale d'une électrovanne destinée à équiper une enceinte selon la figure 2.

La figure 6 est une coupe d'un interrupteur à commande hydrostatique destiné à être associé à une électrovanne selon la figure 5.

La figure 7 est une coupe d'un dessiccateur d'air.

Les figures 8 et 9 sont respectivement une vue en élévation et une coupe selon IX IX d'une antenne de sonar comportant un dispositif selon l'invention.

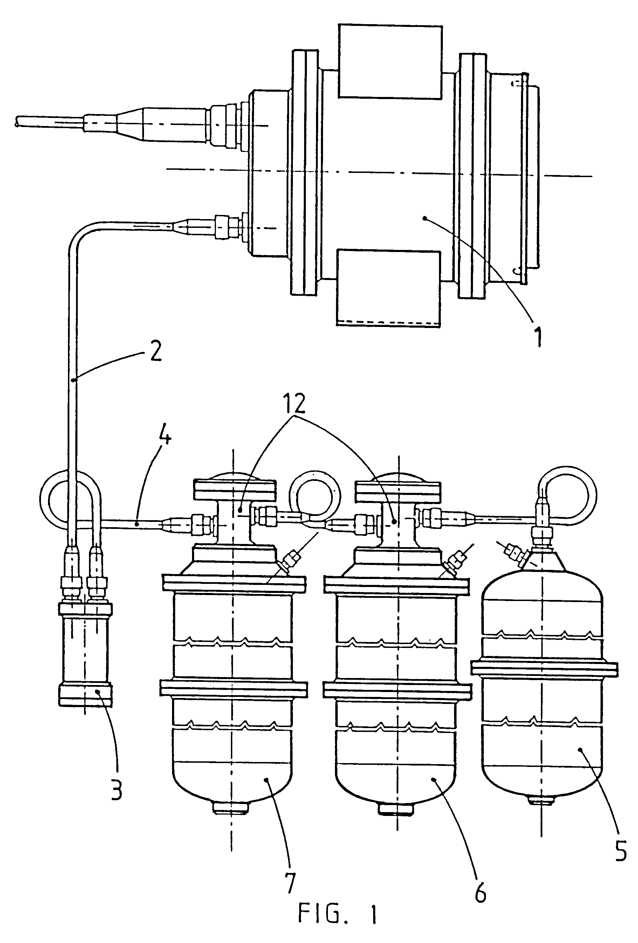

La figure 1 représente un transducteur électroacoustique de tout type connu comportant un boîtier étanche contenant des plaquettes piézo-électriques intercalées entre des électrodes. Le boîtier du transducteur est rempli de gaz.

Le boîtier du transducteur est connecté sur une canalisation 2 qui est par exemple une canalisation souple capable de résister à la pression hydrostatique ou à une pression externe. La canalisation 2 est connectée sur un déshumidificateur d'air 3 qui contient un produit tel que par exemple du gel de silice qui absorbe l'humidité de l'air.

Le dessiccateur 3 est connecté, par une canalisation 4 à un ensemble de trois bouteilles 5, 6 et 7 qui sont remplies de gaz.

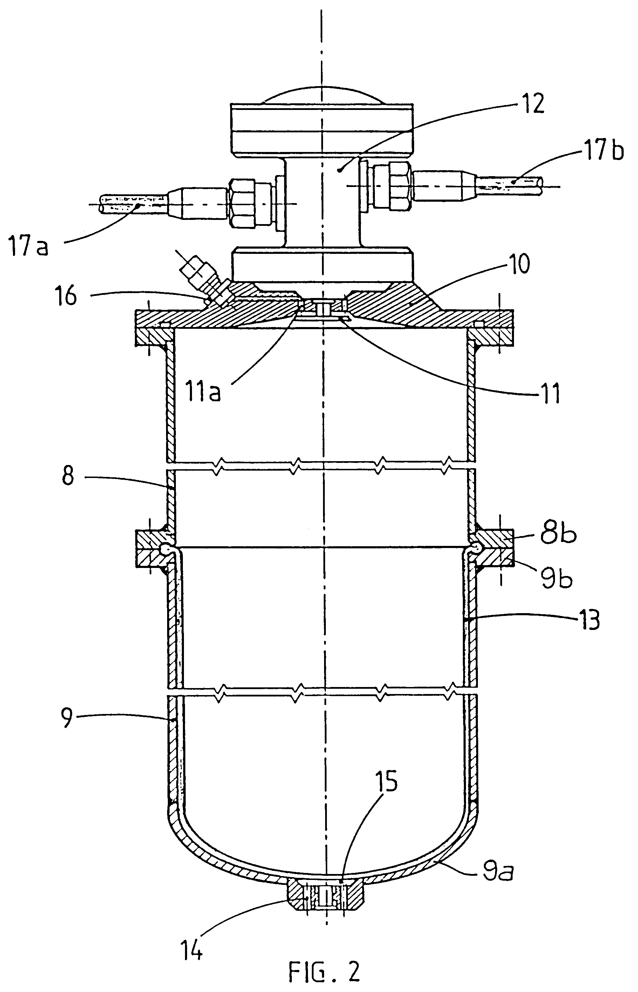

La figure 2 est une coupe axiale de l'une des bouteilles 6 et 7.

On voit que chaque bouteille compte une enceinte métallique qui est composée d'une virole cylindrique 8 dont une extrémité est assemblée par des brides à une deuxième virole cylindrique 9 fermée par un fond bombé 9a et dont l'autre extrémité est fermée par un couvercle 10 portant un clapet 11 qui met ladite bouteille en communication avec une vanne automatique à trois voies 12 qui sera décrite ci-après .

Ladite bouteille métallique contient une poche ou vessie 13 en élastomère déformable dont l'ouverture est pincée de façon étanche entre les deux brides 8b et 9b qui servent à l'assemblage des viroles 8 et 9. Le fond bombé 9a comporte des ouvertures 14 qui sont obturées par un clapet 15 lorsque la vessie est gonflée.

Le repère 16 représente l'embout de gonflage.

La figure 2 représente la vessie 13 en position gonflée.

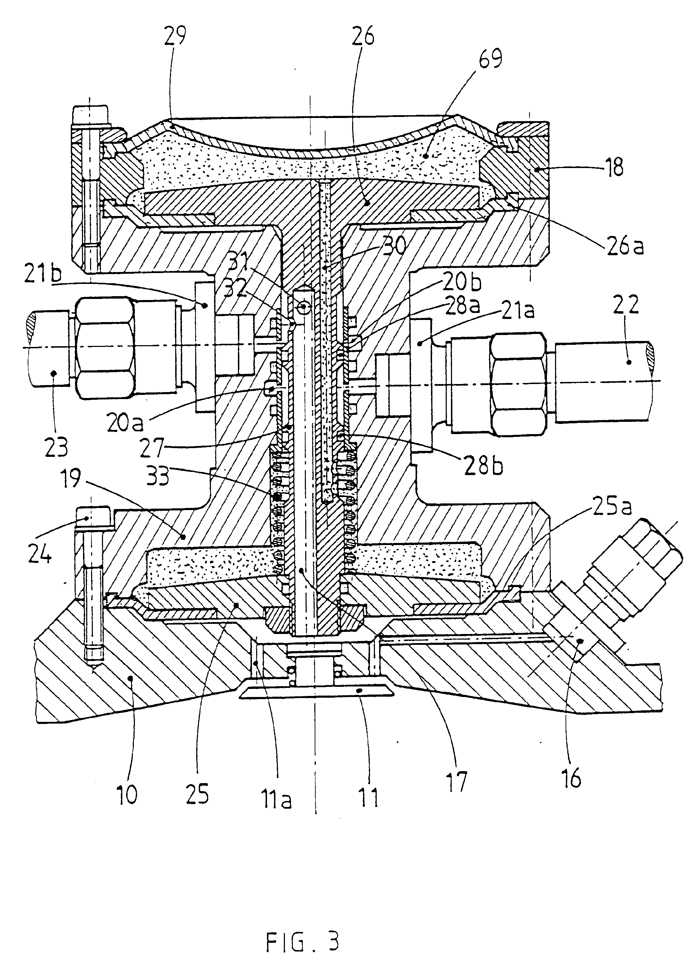

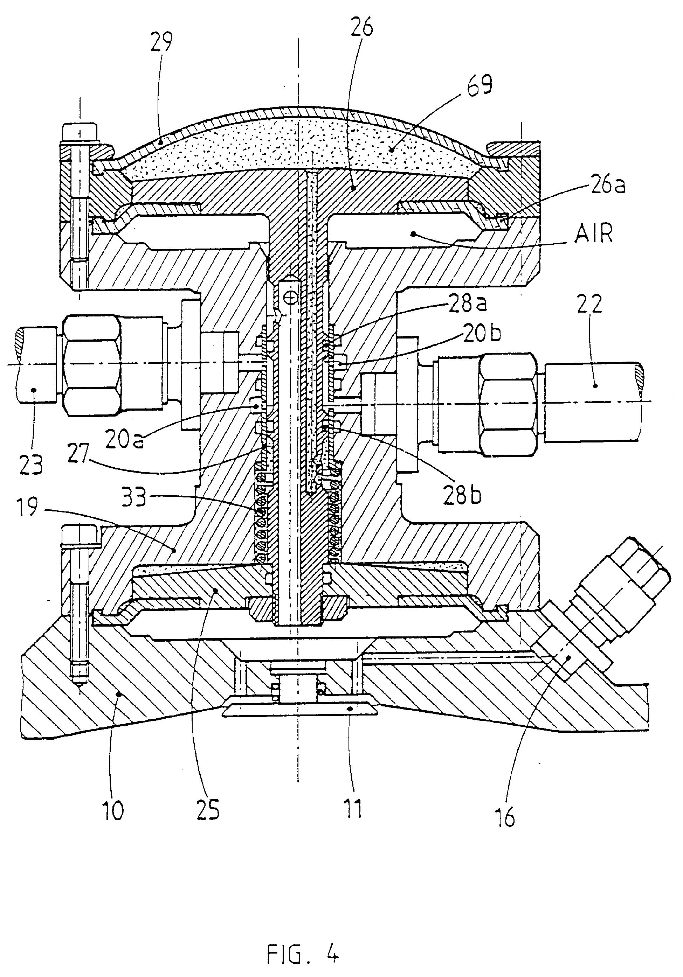

Les figures 3 et 4 sont des coupes axiales de l'une des vannes automatiques à trois voies 12 équipant chacune des bouteilles 6 et 7.

Les figures 3 et 4 représentent deux fonctions différentes d'une même vanne. On voit sur ces figures que chaque vanne comporte un conduit de gaz axial 17 qui communique avec l'intérieur de la vessie sur laquelle la vanne est montée par des conduits 11 a obturables par le clapet 11.

Le corps de vanne 19 comporte deux gorges 20a, 20b qui communiquent avec des conduits latéraux dans chacun desquels sont vissés des embouts filetés 21a et 21b sur lesquels sont connectées deux canalisations 22 et 23.

Le corps de vanne 19 comporte une embase qui est fixée par des vis 24 sur le couvercle 10 d'une des bouteilles contenant une vessie. Le corps de vanne contient deux pistons 25 et 26 qui sont solidaires respectivement des membranes déformables en élastomères vulcanisés 25a et 26a. Les deux pistons sont reliés entre eux par une tige axiale 27 dans laquelle passe le canal axial 17. La tige 27 porte deux joints 28a et 28b dont la position varie avec les déplacements de la tige et détermine la communication entre les trois voies. L'espace situé entre la membrane 25a et le joint inférieur 28b est rempli d'huile.

La partie supérieure du corps de vanne est fermée par une membrane étanche et déformable 29 dont la face externe est placée au contact de l'eau. L'espace compris entre les deux membranes 29 et 26a est rempli d'huile 69 et cet espace communique par un canal 30, creusé dans la tige 27, avec l'espace rempli d'huile situé entre le joint inférieur 28b et la membrane 25a.

Le conduit d'air axial 17 comporte à son extrémité supérieure deux canaux 31 et 32 qui communiquent avec l'espace compris entre la membrane 26a et le joint supérieur 28a. Les vannes selon les figures 3 et 4 sont conçues pour que les pièces mécaniques soient en contact avec l'eau de mer.

La pression hydrostatique s'exerce sur la membrane 29 et l'huile transmet cette pression aux deux pistons 26 et 25. L'ensemble mobile composé de deux pistons reliés par une tige augmente la surface soumise à la pression hydrostatique et améliore la fiabilité du fonctionnement.

La vanne comporte en outre, un ressort de rappel 33 qui prend appui sur le corps de vanne et repousse les deux pistons vers le bas c'est à dire vers ladite bouteille contenant la vessie gonflée.

La poche de ladite bouteille 5 est gonflée à la pression atmosphérique ou a une pression légèrement supérieure et elle est connectée directement sur la canalisation d'air, sans interposition d'une vanne 12, comme on le voit sur la figure 1. La poche de ladite bouteille 6 est gonflée à une pression intermédiaire par exemple 8 bars tandis que la poche de ladite bouteille 7 est gonflée à une pression plus élevée par exemple 20 bars qu'elle peut supporter grâce au boîtier métallique 9, 9a qui peut résister a une telle pression et qui soutient la poche déformable.

Le fonctionnement est le suivant :

On gonfle les poches desdites bouteilles 6 et 7 en branchant un moyen de gonflage sur les embouts de gonflage 16. La pression dans chaque poche repousse les pistons 25 et 26 de la vanne 12 équipant cette poche et place la vanne dans la position de la figure 4 ou les deux gorges 20a, 20b se trouvent entre les deux joints 28a, 28b, les deux voies latérales de la vanne communiquent entre elles et le gaz contenu dans la poche ne peut en sortir car les orifices 31, 32 ne communiquent pas avec les sorties latérales.

Lorsqu'on immerge les transducteurs et les bouteilles 5, 6 et 7 connectées sur ceux-ci conformément à la figure 1, la pression hydrostatique s'exerce sur les membranes 29 des deux vannes qui transmet la pression à l'huile contenue dans chaque vanne. La pression hydrostatique s'exerce sur la poche déformable de ladite bouteille 5 qui se contracte en chassant le gaz qu'elle contenait vers le boîtier du transducteur pour maintenir celui-ci en équipresssion avec l'eau. Le volume de la poche déformable de ladite bouteille 5 est calculé pour que la poche ne soit pas complètement comprimée lorsqu'on atteint la pression intermédiaire de 8 bars. Lorsque la poche déformable de ladite bouteille 5 atteint le couvercle 10 elle s'appuie contre le clapet 11 et le ferme.

Lorsque la pression atteint la pression intermédiaire de 8 bars, la vanne 12 équipant la poche de ladite bouteille intermédiaire 6 change automatiquement de position. En effet, à ce moment là, les deux pistons 25 et 26 qui équipent cette vanne sont soumis à la pression hydrostatique sur leur face supérieure et à la pression du gaz dans la poche de ladite bouteille 6 sur leur face inférieure c'est-à-dire à deux pressions égales.

Le ressort de rappel 33 pousse les deux pistons vers le bas et la vanne bascule automatiquement dans la position représentée sur la figure 3 où la communication avec la poche amont de ladite bouteille 5 est interrompue et où la poche de ladite bouteille 6 communique avec les transducteurs. On voit que la vanne 12 constitue un pressostat qui compare la pression hydrostatique à la pression dans la poche déformable et qui manoeuvre automatiquement la vanne lorsque les deux pressions deviennent égales.

Pendant que la profondeur d'immersion continue à croître, le gaz contenu dans la poche de ladite bouteille intermédiaire 6 passe dans les transducteurs et maintient ceux-ci en équipression.

Lorsque la pression hydrostatique atteint la pression dans la poche de ladite bouteille 7 c'est-à-dire 20 bars, la vanne 12 équipant la poche de ladite bouteille 7 détecte l'égalité des pressions et bascule automatiquement dans la position représentée sur la figure 3 où la troisième poche communique avec les transducteurs.

Pendant la remontée vers la surface, on obtient automatiquement une suite d'opérations inverses des précédentes.

A mesure que la pression hydrostatique décroît, la poche de ladite bouteille 7 se déploie et une partie du gaz contenu dans les transducteurs passe dans la poche qui se trouve entièrement remplie lorsque la pression hydrostatique est descendue à 20 bars. A ce moment là, la pression dans la poche de ladite bouteille 7 devenant supérieure à la pression hydrostatique, la pression de gaz agissant sur les faces inférieures des pistons 25 et 26 fait basculer la vanne 12 équipant la bouteille 7. Cette vanne occupe à nouveau la position représentée sur la figure 4. Le gaz contenu dans les transducteurs passe progressivement dans la poche de ladite bouteille 6 jusqu'à ce que celle-ci soit entièrement gonflée ce qui a lieu lorsque la pression hydrostatique est devenue égale à celle de la poche intermédiaire.

La poche déformable de ladite bouteille 6 étant alors en butée contre la bouteille métallique qui la contient ne peut plus se gonfler. La pression dans la poche devient supérieure à la pression hydrostatique et la vanne 12 équipant la poche intermédiaire de ladite bouteille 6 bascule, mettant les transducteurs en communication avec la poche de ladite bouteille 5 jusqu'à ce qu'on soit remonté en surface.

On voit que le dispositif décrit permet de maintenir une enceinte immergée à la pression hydrostatique sans échappement d'aucune bulle de gaz dans l'eau et sans jamais créer dans l'enceinte aucune surpression. Ce résultat est atteint en utilisant une série de poches déformables ayant un volume relativement faible.

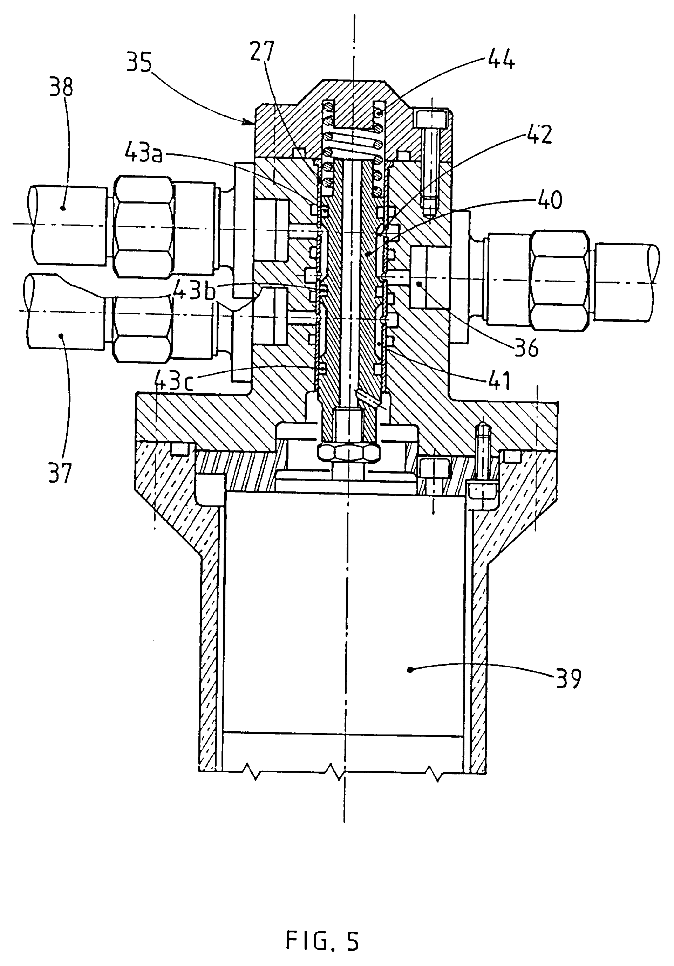

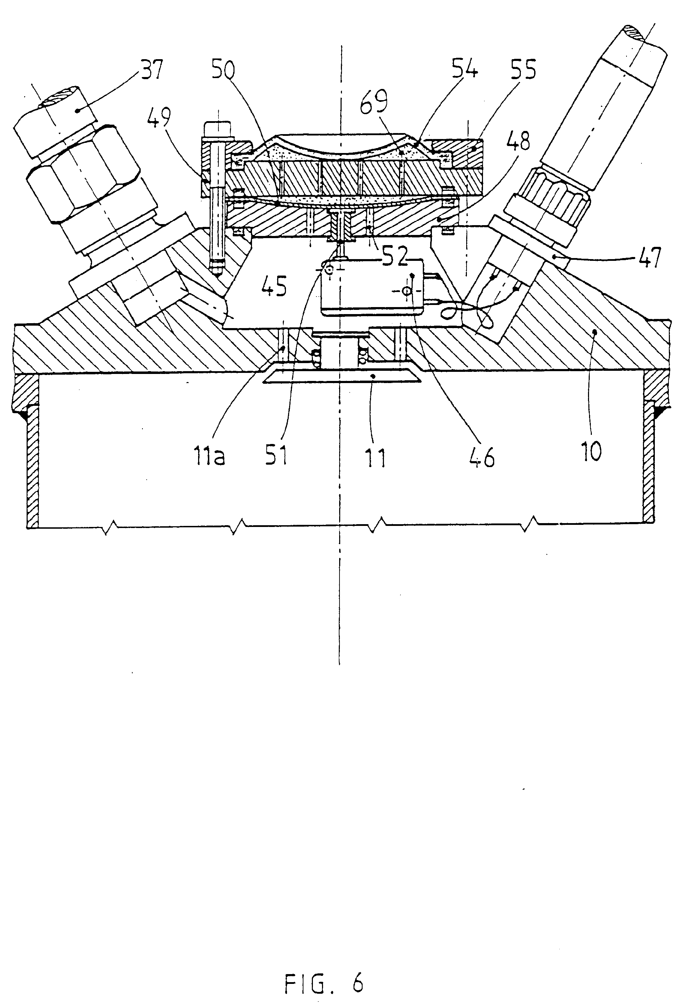

Les figures 5 et 6 représentent une variante de réalisation dans laquelle les vannes automatiques 12 commandées directement par les différences de pression sont remplacées par des électrovannes commandées par un interrupteur hydrostatique.

La figure 5 est une coupe axiale d'une électrovanne à trois voies 35 équipant l'une des deux bouteilles 6 et 7.

Une des voies 36, par exemple la voie située à droite de la figure 5, est connectée aux transducteurs dans le cas de l'électrovanne équipant la bouteille 7 ou à la bouteille 7 dans le cas de l'électrovanne équipant la bouteille 6. Une autre voie 37 est connectée sur la bouteille qui porte l'électrovanne. La troisième voie est connectée sur la bouteille située en amont c'est-à-dire sur la bouteille 5 dans le cas de l'électrovanne équipant la bouteille 6 et sur la bouteille 6 dans le cas de l'électrovanne équipant la bouteille 7.

Chaque électrovanne comporte une bobine 39 et un noyau mobile prolongé par une tige 40 qui coulisse dans un alésage axial dans lequel les trois voies débouchent à des niveaux différents.

La tige mobile 40 porte trois joints d'étanchéité 43a, 43b, 43c et deux gorges 41. 42 situées chacune entre deux joints.

La tige 40 est repoussée vers le bas par un ressort de rappel 44.

La figure 5 représente une électrovanne dans une position où la bobine de l'électro-aimant n'est pas excitée. Le ressort 44 maintient la tige 40 vers le bas. Dans cette position la voie 38 communique avec la voie 36 c'est-à-dire que la voie 37 venant de la bouteille équipée de l'électrovanne est isolée.

La figure 6 est une coupe axiale sur laquelle on retrouve le couvercle 10 d'une des bouteilles 6 ou 7 ainsi que le clapet 11 et les conduits de passage de gaz 11 a.

Le couvercle 10 comporte une cavité fermée 45 dans laquelle débouchent les conduits 11 a ainsi que la canalisation 37 qui est connectée à une des voies de l'électrovanne. La cavité 45 contient un micro-interrupteur 46 qui est connecté par des conducteurs électriques à l'électro-aimant 39 qui commande l'électrovanne. Les conducteurs électriques sortent du couvercle par un connecteur étanche 47.

La cavité 45 est fermée par un couvercle qui est composé de deux pièces métalliques 48 et 49 qui délimitent entre elles un espace dans lequel se trouve une membrane métallique élastique 50 qui porte en son centre une tige 51 destinée à actionner le micro-interrupteur.

La pièce 48 comporte des canaux 52 qui mettent en communication la cavité 45 avec l'espace située sous la membrane 50 de sorte que la pression de gaz dans la bouteille s'exerce contre la face inférieure de la membrane.

La pièce 49 comporte également des canaux 53 qui la traversent de part en part. Le dispositif comporte en outre une membrane déformable en élastomère 54 qui est placée au contact de l'eau et qui est maintenue appliquée de façon étanche au-dessus de la pièce 49 par une bride 55. L'espace compris entre la membrane 54 et la membrane 50 est rempli d'huile 69 qui se trouve à la pression hydrostatique. Tant que la pression hydrostatique est inférieure à la pression dans la bouteille, la membrane 50 est tendue et le micro-interrupteur 46 est ouvert. L'électro-aimant 39 commandé par le micro-interrupteur 46 n'est pas excité et l'électrovanne 35 est dans la position représentée sur la figure 5.

Lorsque la pression hydrostatique devient sensiblement égale à la pression dans la bouteille, la membrane élastique 50 fléchit et revient à la position de repos et la tige 51 ferme le micro-interrupteur. L'électro-aimant est excité et l'électrovanne 35 met la voie 36 en communication avec la voie 37 qui est connectée à la bouteille associée à l'électrovanne.

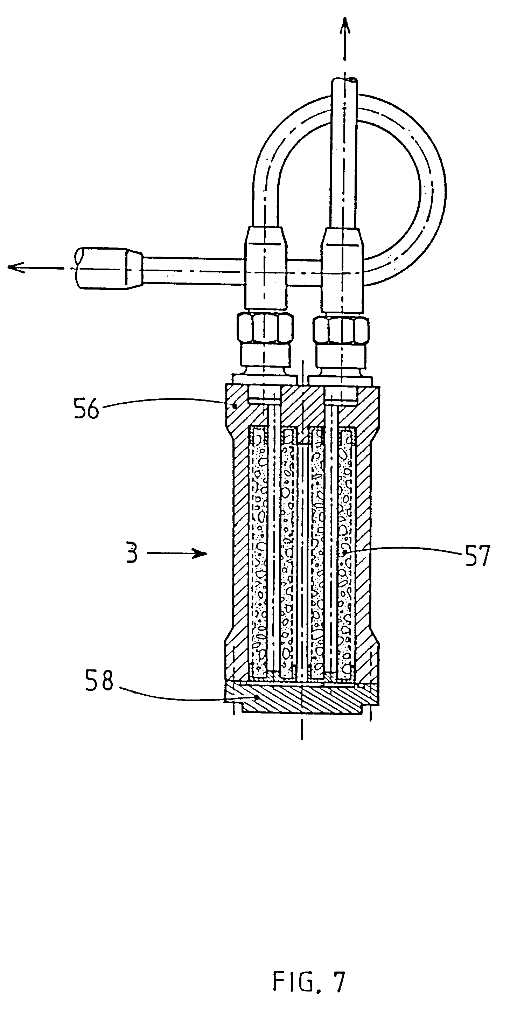

La figure 7 est une coupe du dessiccateur d'air 3 représenté sur la figure 1. Celui-ci a pour fonction d'absorber l'humidité de l'air pour conserver l'air sec malgré un séjour prolongé en immersion. Il comporte un boîtier transparent 56 par exemple un boîtier en méthacrylate de méthyle et des cartouches 57 d'un produit qui absorbe la vapeur d'air, par exemple du gel de silice, qui est placé dans une enveloppe en treillis qui arrête le produit et laisse passer l'air. Le produit absorbant contient une matière qui change de couleur avec le taux d'humidité. L'air traverse les deux cartouches pour passer du conduit central de l'une au conduit central de l'autre. Le corps transparent 56 est fermé par un fond démontable 58 qui permet de changer les cartouches pour les régénérer par passage dans une étuve.

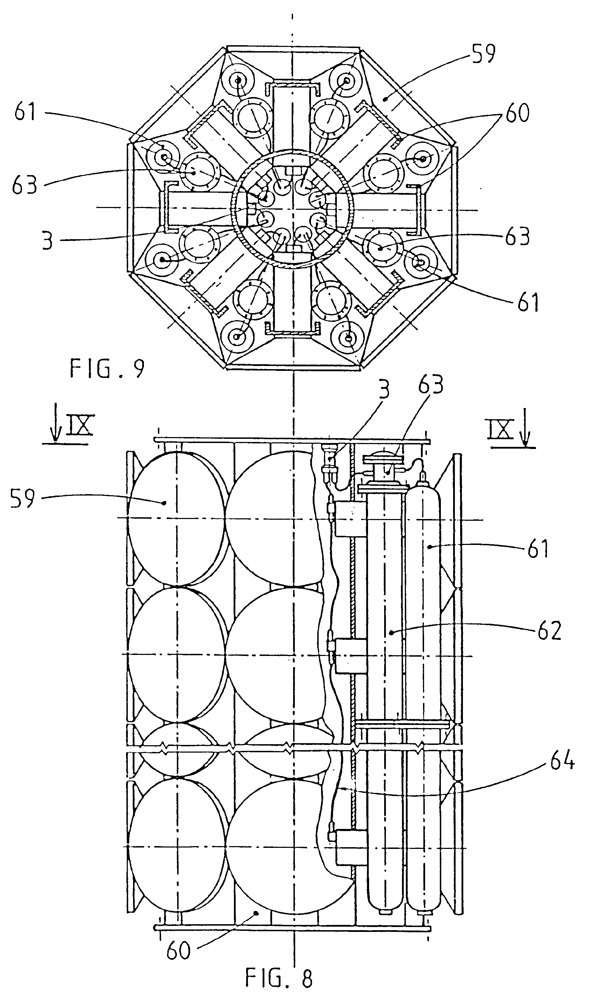

Les figures 8 et 9 représentent respectivement une vue en élévation avec un arrachement partiel et une vue suivant IX IX d'une antenne de sonar de forme générale cylindrique, de section polygonale, qui comporte des colonnes de transducteurs de type Tonpilz montés sur une structure porteuse 60. Dans cet exemple, on utilise une paire de bouteilles 61, 62 pour chaque colonne de transducteur. Les bouteilles 61, 62 contiennent chacune une poche déformable placée au contact de l'eau. Les bouteilles 61 sont remplies de gaz à la pression atmosphérique tandis que les bouteilles 62 sont remplies de gaz comprimé par exemple à 5 bars. Les bouteilles 62 sont équipées d'une vanne à trois voies 63 selon les figures 3 et 4. La voie de sortie de la vanne 63 est connectée sur un dessiccateur d'air 3 qui est lui-même connecté sur un collecteur 64 sur lequel les transducteurs d'une colonne sont connectés en parallèle. On voit sur les figures 8 et 9 que grâce à leur volume réduit les bouteilles 61, 62 peuvent facilement être logées à l'intérieur de la structure porteuse de l'antenne sans accroître l'encombrement de celle-ci.

## Revendications

1. Procédé pour maintenir le gaz contenu dans une enceinte immergée (1) en équilibre de pression avec l'extérieur, dans lequel on immerge simultanément ladite enceinte (1) et plusieurs bouteilles (5, 6, 7) contenant chacune une poche (13) déformable remplie de gaz qui communique avec ladite enceinte caractérisé en ce que lesdites poches déformables sont remplies de gaz comprimé à des pressions différentes d'une poche à l'autre, et pendant l'immersion on établit automatiquement la communication entre ladite enceinte et chacune des dites poches déformables lorsque la pression hydrostatique atteint sensiblement la pression du gaz contenu dans ladite poche et pendant la remontée en surface on isole automatiquement chacune des poches lorsque la pression dans celle-ci atteint à nouveau la pression initiale.

2. Dispositif pour maintenir le gaz contenu dans une enceinte immergée (1) en équilibre de pression avec l'extérieur, comportant plusieurs bouteilles (5, 6, 7) contenant chacune une poche (13) déformable remplie de gaz qui communique avec l'intérieur de ladite enceinte et qui est immergée en même temps que celle-ci, caractérisé en ce que lesdites poches déformables desdites bouteilles (5, 6, 7...) sont remplies de gaz comprimé à des pressions différentes, lesquelles poches sont connectées en parallèle sur un collecteur (4, 2) qui est branché à ladite enceinte (1) et chacune des poches desdites bouteilles (6, 7) autres que la poche de ladite bouteille (5) qui contient le gaz le moins comprimé est branchée au dit collecteur par une vanne à trois voies (12, 35) qui est commandée automatiquement par des moyens qui ouvrent la communication entre ladite poche et ledit collecteur (4) lorsque la pression hydrostatique est sensiblement égale à la pression dans ladite poche et qui ferment automatiquement ladite communication lorsque la pression hydrostatique est légèrement inférieure à la pression dans ladite poche.

3. Dispositif selon la revendication 2 caractérisé en ce que chaque bouteille, comporte une première virole cylindrique (8) fermée par un couvercle (10) et une deuxième virole cylindrique (9) fermée par un fond bombé (9a), lesquelles viroles sont assemblées entre elles par deux brides (8b, 9b) entre lesquelles l'ouverture de ladite poche est serrée de façon étanche et ledit fond bombé (9a) comporte des ouvertures (14) qui communiquent la pression externe à l'extérieur de ladite poche tandis que ledit couvercle (10) comporte des ouvertures (11a) qui mettent l'intérieur de ladite poche en communication avec ledit collecteur (4) ou avec une des dites vannes à trois voies.

4. Dispositif selon l'une quelconque des revendications 2 et 3 caractérisé en ce que chacune des poches déformables desdites bouteilles (6, 7) autres que la poche gonflée du gaz le moins comprimé, est équipée d'une vanne à trois voies qui comporte deux pistons (25, 26) reliés entre eux par une tige (27), lesquels pistons sont soumis sur une de leurs deux faces à la pression du gaz dans l'une des poches et sur l'autre face à la pression hydrostatique et à l'action d'un ressort (33) de sorte que lorsque la pression hydrostatique devient sensiblement égale à la pression du gaz dans ladite poche, ledit ressort déplace les deux pistons ce qui met ladite poche en communication avec ledit collecteur (4) et en même temps isole dudit collecteur des poches gonflées initialement à une pression moindre.

5. Dispositif selon la revendication 4 caractérisé en ce que chacun desdits pistons est équipé d'une membrane en élastomère (25a, 26a) qui assure l'étanchéité entre ledit piston et le corps de vanne.

6. Dispositif selon l'une quelconque des revendications 4 et 5 caractérisé en ce que ladite tige (27) comporte un canal longitudinal (30) qui traverse le piston supérieur (26) et qui met en communication l'espace situé au-dessus dudit piston supérieur (26) avec l'espace situé entre ledit piston inférieur (25) et un joint (28b) porté par ladite tige (27) lesquels espaces sont remplis d'huile et ladite vanne comporte en outre une membrane déformable (29) en élastomère dont la face externe est au contact de l'eau et dont la face interne est au contact de ladite huile.

7. Dispositif selon l'une quelconque des revendications 4 à 6 caractérisé en ce que ladite tige comporte un canal longitudinal (17) qui débouche au-dessous dudit piston inférieur (25) et dont l'extrémité supérieure comporte au moins un canal (31, 32) qui débouche à l'extérieur de ladite tige.

8. Dispositif selon l'une quelconque des revendications 2 et 3 caractérisé en ce que lesdites vannes à trois voies sont des électrovannes (35) dont la bobine (39) est commandée par un micro-intérrupteur (46) a commande hydrostatique.

9. Dispositif selon la revendication 8 caractérisé en ce que le couvercle (10) de chaque bouteille métallique contenant les poches autres que la poche contenant le gaz le moins comprimé comporte une cavité (45) dans laquelle est logé un micro-interrupteur (46), laquelle cavité communique avec l'intérieur de ladite poche par des canaux (11a), avec l'une des électrovannes par une canalisation (37) et est fermée par un couvercle qui est composé de deux pièces métalliques (48, 49) qui délimitent entre elles un espace dans lequel une membrane métallique élastique (50) peut se déplacer librement, laquelle membrane porte une tige centrale (51) qui agit sur le contact dudit micro-interrupteur et ladite membrane métallique (50) est soumise sur une des ses faces à la pression du gaz dans ladite poche et sur son autre face à la pression d'une huile qui est maintenue à la pression hydrostatique par une membrane en élastomère (54).

10. Dispositif selon l'une quelconque des revendications 2 à 9 caractérisé en ce qu'il comporte, en outre, un dessiccateur d'air (3) qui est placé sur le dit collecteur (4) et qui compte un corps (56) en une matière transparente et des cartouches (57) en un matériau qui absorbe l'humidité de l'air en changeant de couleur, par exemple en un gel de silice, lequel matériau est enfermé dans un treillis perméable à l'air.

**Patentansprüche**

1. Verfahren, um das in einem versenkten Behälter (1) enthaltene Gas im Druckgleichgewicht mit der Umgebung zu halten, bei welchem der Behälter (1) und mehrere, jeweils einen gasgefüllten, verformbaren und mit dem Behälter verbundenen Beutel (13) enthaltende Flaschen (5, 6, 7) gleichzeitig versenkt werden,
dadurch gekennzeichnet, daß
die verformbaren Beutel mit Druckgas bei von einem Beutel zum anderen verschiedenen Drücken gefüllt sind, und daß während der Versenkung automatisch die Verbindung zwischen dem Behälter und jedem der verformbaren Beutel hergestellt wird, wenn der hydrostatische Druck im wesentlichen den Druck des im Beutel enthaltenen Gases erreicht, und daß während der Wiederanhebung zur Oberfläche automatisch jeder der Beutel isoliert wird, wenn der Druck in diesem von neuem den Anfangsdruck erreicht.

2. Vorrichtung, um das in einem versenkten Behälter (1) enthaltene Gas im Druckgleichgewicht mit der Umgebung zu halten, mit mehreren Flaschen (5, 6, 7), die jeweils einen verformbaren gasgefüllten Beutel (13) enthalten, der mit dem Inneren des Behälters verbunden ist und gleichzeitig mit diesem versenkt wird,
dadurch gekennzeichnet, daß
die verformbaren Beutel der Flaschen (5, 6, 7, ...) mit Druckgas bei unterschiedlichen Drücken gefüllt und parallel an eine Sammelleitung (4, 2) angeschlossen sind, die an den Behälter (1) angeschlossen ist, und daß jeder Beutel der Flaschen (6, 7) mit Ausnahme des Beutels derjenigen Flasche (5), die das am schwächsten komprimierte Gas enthält, an die Sammelleitung über ein Dreiwegventil (12, 35) angeschlossen ist, das automatisch durch Einrichtungen gesteuert wird, die die Verbindung zwischen dem Beutel und der Sammelleitung (4) öffnen, wenn der hydrostatische Druck im wesentlichen gleich dem Druck im Beutel ist, und die die Verbindung automatisch schließen, wenn der hydrostatische Druck geringfügig kleiner als der Druck im Beutel ist.

3. Vorrichtung nach Anspruch 2, dadurch gekennzeichnet, daß jede Flasche einen durch einen Deckel (10) verschlossenen ersten zylindrischen Ring (8) und einen durch einen gewölbten Boden (9a) verschlossenen zweiten zylindrischen Ring (9) aufweist, die untereinander durch zwei Flansche (8b, 9b) verbunden sind, zwischen denen die Öffnung des Beutels gasdicht eingeklemmt ist, daß der gewölbte Boden (9a) Öffnungen (14) aufweist, die den Umgebungsdruck ans Äußere des Beutels heranführen, und daß der Deckel (10) Öffnungen aufweist, die das Innere des Beutels in Verbindung mit der Sammelleitung (4) oder einem der Dreiwegventile bringen.

4. Vorrichtung nach einem der Ansprüche 2 bis 3, dadurch gekennzeichnet, daß jeder verformbare Beutel der Flaschen (6, 7) mit Ausnahme des mit dem am schwächsten komprimierten Gas gefüllten Beutels mit einem Dreiwegventil ausgestattet ist, der zwei untereinander durch eine Stange (27) verbundene Kolben (25, 26) umfaßt, welche Kolben an einer ihrer Seiten dem Druck des Gases in dem einem Beutel und auf der anderen Seite dem hydrostatischen Druck und der Wirkung einer Feder (33) ausgesetzt sind, so daß wenn der hydrostatische Druck im wesentlich gleich dem Druck des Gases im Beutel wird, die Feder die zwei Kolben verschiebt, was den Beutel in Verbindung mit der Sammelleitung (4) bringt und gleichzeitig ursprünglich unter geringerem Druck stehende Beutel von der Sammelleitung isoliert.

5. Vorrichtung nach Anspruch 4, dadurch gekennzeichnet, daß jeder der Kolben mit einer Elastomermembran (25a, 26a) versehen ist, die die Dichtigkeit zwischen dem Kolben und dem Ventilkörper sicherstellt.

6. Vorrichtung nach einem der Ansprüche 4 bis 5, dadurch gekennzeichnet, daß die Stange (24) einen Längskanal (30) aufweist, der den oberen Kolben (26) durchläuft und den Raum oberhalb des oberen Kolbens (26) mit dem Raum zwischen dem unteren Kolben (25) und einer von der Stange (27) getragenen Dichtung (28b) in Verbindung bringt, wobei die Räume mit Öl gefüllt sind, und daß das Ventil zusätzlich eine verformbare Elastomermembran (29) umfaßt, deren Außenseite in Kontakt mit dem Wasser ist, und deren Innenseite in Kontakt mit dem Öl ist.

7. Vorrichtung nach einem der Ansprüche 4 bis 6, dadurch gekennzeichnet, daß die Stange einen Längskanal (17) aufweist, der unterhalb des unteren Kolbens (25) mündet und dessen oberes Ende wenigstens einen Kanal (31, 32) umfaßt, der außerhalb der Stange mündet.

8. Vorrichtung nach einem der Ansprüche 2 bis 3, dadurch gekennzeichnet, daß die Dreiwegventile Magnetventile (35) sind, deren Spule (39) durch einen Mikroschalter (46) mit hydrostatischer Steuerung gesteuert wird.

9. Vorrichtung nach Anspruch 8, dadurch gekennzeichnet, daß der Deckel (10) jeder die Beutel mit Ausnahme des das am schwächsten komprimierte Gas enthaltenden Beutels enthaltenden metallischen Flasche einen Hohlraum (45) umfaßt, der einen Mikroschalter (46) enthält, mit dem Inneren des Beutels über Kanäle (11a) und mit einem der Magnetventile über eine Leitung (37) verbunden ist und durch einen Deckel verschlossen ist, der aus zwei metallischen Teilen (48, 49) zusammengesetzt ist, die zwischen sich einen Raum definieren, in dem eine elastische metallische Membran (50) sich frei bewegen kann, wobei die Membran eine zentrale Stange (51) trägt, die auf den Kontakt des Mikroschalters wirkt und die metallische Membran (50) auf einer ihrer Seiten dem Druck des Gases im Beutel und auf ihrer anderen Seite dem Druck eines Öls ausgesetzt ist, das durch eine Elastomermembran (54) auf dem hydrostatischen Druck gehalten wird.

10. Vorrichtung nach einem der Ansprüche 2 bis 9, dadurch gekennzeichnet, daß sie ferner einen Lufttrockner (3) umfaßt, der an der Sammelleitung (4) angeordnet ist und einen Körper (56) aus transparentem Material und Patronen (57) aus die Luftfeuchtigkeit unter Farbänderung absorbierendem Material wie etwa einem Silicagel aufweist, wobei das Material in einem luftdurchlässigen Geflecht eingeschlossen ist.

## Claims

1. Process for maintaining the gas contained in a submerged enclosure (1) in pressure equilibrium with the outside, of the type in which said enclosure (1) and a plurality of bottles (5, 6, 7) each one containing a gas-filled deformable bag (13) which communicates with said enclosure are immersed simultaneously, characterized in that said deformable bags are filled with a gas compressed at pressures differing from one bag to the other and, during immersion, communication is automatically established between said enclosure and each of said deformable bags when the hydrostatic pressure attains substantially the pressure of the gas contained in said bag and, during rise to the surface, each of the bags is automatically isolated when the pressure therein attains the initial pressure again.

2. Device for maintaining the gas contained in a submerged enclosure (1) in pressure equilibrium with the outside, of the type comprising a plurality of bottles (5, 6, 7) each one containing a gas-filled deformable bag (13) which communicates with the interior of said enclosure and which is immersed at the same time as the latter, characterized in that said deformable bags of said bottles (5, 6, 7, ...) are filled with a gas compressed at different pressures, which bags are connected in parallel to a manifold (4, 2) which is connected to said enclosure (1) and each of the bags of said bottles (6, 7) other than the bag of said bottle (5) which contains the least compressed gas, is connected to said manifold by a three-way valve (12, 35) which is automatically controlled by means which open communication between said bag and said manifold (4) when the hydrostatic pressure is substantially equal to the pressure in said bag, and which automatically close said communication when the hydrostatic pressure is slightly less than the pressure in said bag.

3. Device according to Claim 2, characterized in that each bottle comprises a first cylindrical shell (8) closed by a cover (10) and a second cylindrical shell (9) closed by a convex bottom (9a), which shells are assembled together by two flanges (8b, 9b) between which the opening of said bag is hermetically clamped and said convex bottom (9a) comprises openings (14) which communicate the external pressure to outside said bag while said cover (10) comprises openings (12a) which place the interior of said bag in communication with said manifold (4) or with one of said three-way valves.

4. Device according to any one of Claims 2 and 3, characterized in that each of the deformable bags of said bottles (6, 7) other than the bag inflated with the least compressed gas is equipped with a three-way valve which comprises two pistons (25, 26) connected together by a rod (27), which pistons are subjected on one of their two faces to the pressure of the gas in one of the bags and on the other face to the hydrostatic pressure and to the action of a spring (33), with the result that, when the hydrostatic pressure becomes substantially equal to the pressure of the gas in said bag, said spring displaces the two pistons, which places said bag in communication with said manifold (4) and at the same time isolates said manifold from the bags initially inflated at a lesser pressure.

5. Device according to Claim 4, characterized in that each of said pistons is equipped with an elastomer membrane (25a, 26a) which ensures seal between said piston and the valve body.

6. Device according to any one of Claims 4 and 5, characterized in that said rod (27) comprises a longitudinal channel (30) which passes through the upper piston (26) and which places in communication the space located above said upper piston (26) with the space located between said lower piston (25) and a seal (28b) carried by said rod (27), which spaces are filled with oil and said valve further comprises a deformable membrane (29) made of elastomer of which the outer face is in contact with the water and of which the inner face is in contact with said oil.

7. Device according to any one of Claims 4 to 6, characterized in that said rod comprises a longitudinal channel (17) which opens out below said lower piston (25) and of which the upper end comprises at least one channel (31, 32) which opens out outside said rod.

8. Device according to any one of Claims 2 and 3, characterized in that said three-way valves are electro-valves (35) of which the coil (39) is controlled by a hydrostatically controlled micro-switch (46).

9. Device according to Claim 8, characterized in that the cover (10) of each metal bottle containing the bags other than the bag containing the least compressed gas comprises a cavity (45) in which is housed a micro-switch (46), which cavity communicates with the interior of said bag via channels (11a), with one of the electro-valves via a pipe (37) and is closed by a cover which is composed of two metal pieces (48, 49) which define therebetween a space in which an elastic metal membrane (50) may move freely, which membrane carries a central rod (51) which acts on the contact of said micro-switch and said metal membrane (50) is subjected on one of its faces to the pressure of the gas in said bag and on its other face to the pressure of an oil which is maintained at the hydrostatic pressure by an elastomer membrane (54).

10. Device according to any one of Claims 2 to 9, characterized in that it further comprises an air dehumidifier (3 )which is placed on said manifold (4) and which comprises a body (56) made of transparent material and cartridges (57) made of a material which absorbs the humidity of the air while changing colour, for example a silica gel, which material is enclosed in an air-permeable lattice.

FIG. 1

FIG. 2

FIG. 3

FIG. 4

FIG. 5

FIG. 6

16

FIG. 7

FIG. 9

FIG. 8